# FASCICULE DE BREVET EUROPEEN

(11) **EP 0 521 794 B1**
(45) Date de publication et mention de la délivrance du brevet: **01.03.1995**
(21) Numéro de dépôt: 92401915.1
(22) Date de dépôt: 03.07.1992
(51) Int. Cl.: F25C 5/00, B65D 88/68, B65G 65/48, B24C 1/00, B24C 7/00

(54) **Appareil de stockage et de transport de billes de glace, sans collage de celles-ci, depuis leur lieu de fabrication jusqu'à leur lieu d'utilisation ou on les projette sur une cible**
Vorrichtung zur Lagerung und Förderung von Eiskugeln, ohne Verschmelzung derselben, von ihrem Herstellungsort bis zu ihrem Verwendungsort wo sie gegen eine Zielfläche geschleudert werden
Apparatus for storing and conveying ice-balls, without sticking to each other, from their place of production to their place of use, where they are propelled against a target

(30) Priorité: 05.07.1991 FR 9108465
(43) Date de publication de la demande: 07.01.1993
(73) Titulaire: COMMISSARIAT A L'ENERGIE ATOMIQUE, 75015 Paris (FR)
(72) Inventeur: Manificat, André, F-38100 Grenoble (FR)
(74) Mandataire: Dubois-Chabert, Guy

(56) Documents cités:
- EP-A- 0 201 777
- DE-A- 2 923 672
- FR-A- 1 570 506
- US-A- 2 699 403
- US-A- 3 067 591
- US-A- 3 251 512
- US-A- 4 013 196
- US-A- 4 947 592

## Description

La présente invention a trait d'une façon générale au traitement de surfaces par impact de particules solides que l'on projette sous pression sur la surface à traiter. Elle concerne de façon plus particulière un tel traitement effectué à l'aide de billes de glace. Par ce dernier terme, on désigne dans le cadre de la présente invention, tout corps solide à basse température pouvant se sublimer ou devenir liquide à température normale, tel que, par exemple la glace hydrique ordinaire ou la glace carbonique.

On connaît à ce jour différentes méthodes pour nettoyer des surfaces par projection de particules sous pression. On a utilisé par exemple à cet effet des projections de jet de sable ou d'autres matériaux similaires, tels que le corindon, la grenaille de fer ou les billes de polyéthylène.

Toutes ces méthodes qui sont efficaces en ce qui concerne l'action de nettoyage présentent l'inconvénient de laisser un résidu solide plus ou moins contaminé ou pollué qui occupe un volume important et nécessite par conséquent des moyens spécifiques d'évacuation.

C'est pourquoi on a déjà songé à utiliser des particules d'un liquide congelé, comme par exemple de l'eau sous forme de billes de glace, car l'intérêt de ces particules est qu'elles fondent et que le liquide résultant s'évapore en ne laissant que très peu de résidu solide (voir, par exemple, US-A-2 699 403).

Toutefois, l'utilisation de billes de glace pour la projection aux fins de décapage ou de nettoyage de surfaces n'est pas sans poser certains problèmes car il a fallu jusqu'à maintenant produire ces billes de glace à l'endroit même où on les utilise ou tout au moins à une courte distance du lieu de production. En effet, transporter de telles billes dans des tuyauteries augmente de façon importante l'énergie nécessaire à leur propulsion, ce qui est cause de pertes de charge dans les tuyauteries et par conséquent d'un renforcement du coût du traitement. De plus, il est bien connu que les billes de glace ont une tendance naturelle, si on les entasse dans un récipient, à s'agglomérer ou à se coller les unes aux autres sous l'effet de la pression pour constituer une masse compacte inutilisable ultérieurement pour une projection au pistolet. Enfin, les systèmes imaginés jusqu'à ce jour, parmi lesquels par exemple ceux qui font l'objet du document FR-A-2 630 668, sont d'un réglage et d'une mise en oeuvre particulièrement délicats.

Par ailleurs, on connait également des dispositifs de transport, hors d'un réservoir, de matières en vrac (par exemple des matières humides ayant tendance à s'agglomérer) utilisant un agitateur animé en rotation combiné à un obturateur mu en translation (voir EP-A-0 201 777).

La présente invention a précisément pour objet un appareil qui permet le stockage et le transport de billes de glace depuis leur lieu de production jusqu'au lieu d'utilisation ainsi que leur projection sur une surface à traiter, en autorisant leur écoulement le plus fluide possible et sans collage entre elles à partir du réservoir de stockage.

Cet appareil de stockage et de projection comporte en combinaison :
- un réservoir de révolution à triple paroi (interne, médiane et externe) pour le stockage des billes de glace, l'espace compris entre la paroi interne et la paroi médiane constituant une enceinte pour un gaz liquide réfrigérant, l'espace compris entre la paroi médiane et la paroi externe étant sous vide et rempli d'un isolant thermique, ce réservoir se terminant vers le bas par une partie conique puis cylindrique ouverte à la partie inférieure pour communiquer avec une chambre d'injection des billes, et étant fermé, à la partie supérieure, par un couvercle isolant muni d'un orifice de remplissage et sur lequel sont fixés :
   a) un moteur apte à mettre en rotation une tige axiale équipée, dans la partie conique, de pales de brassage, dans la partie cylindrique d'une vis d'Archimède dont le pas est tel qu'elle s'oppose à la descente des billes par gravité lorsqu'elle est mue en rotation par le moteur, et, entre les deux, d'un moyen d'obturation du passage des billes entre la partie conique et la partie cylindrique ;
   b) un vérin apte à commander une translation de la tige axiale selon sa longueur pour déplacer le moyen d'obturation entre une position basse de fermeture du passage des billes et une position haute d'ouverture de ce même passage ;
- un pistolet de projection des billes par air comprimé, dont l'entrée des billes est reliée à la sortie de la chambre d'injection ;
- une source d'air comprimé délivrant cet air à deux pression, l'une basse et l'autre haute, l'air comprimé à basse pression étant délivré par une première canalisation à l'entrée de la chambre d'injection et l'air comprimé à haute pression étant délivré par une seconde canalisation à l'entrée du pistolet ;
- sur le pistolet, une gachette à double contact dont le premier commande l'injection de l'air comprimé à basse et haute pression et dont le second, actionnable postérieurement au premier, commande le vérin de soulèvement de la tige axiale et la mise en rotation du moteur.

L'appareil de stockage tel qu'il vient d'être décrit comporte en effet tous les moyens nécessaires à la réalisation de l'objectif consistant à pouvoir projeter des billes de glace sur une surface à traiter, éloignée de la source de production de ces même billes. En effet, le réservoir à triple paroi permet une conservation des billes à l'abri de la chaleur ; il est adapté intérieurement de moyens d'agitation de ces mêmes billes (pales) qui permettent d'en empêcher l'agglomération par collage et d'en réaliser la progression vers la partie inférieure du même réservoir tout en maintenant la possibilité d'une obturation de ce même passage au niveau de la transition entre la partie conique et la partie cylindrique. La vis d'Archimède, solidaire en rotation de la tige axiale, tourne de façon à ralentir la progression des billes de glace par gravité depuis le récipient de stockage jusqu'à la chambre d'injection. En fonctionnant de cette manière, cette vis d'Archimède ménage un chemin descendant pour les billes en provoquant leur "fluidisation" avec leur entrée dans la chambre d'injection. Elle permet également une régulation du débit des billes de glace, puisque, plus le moteur tourne vite, plus le débit des billes est faible.

La chambre d'injection a également un rôle essentiel, car l'écoulement des billes entre le réservoir et le conduit d'alimentation du pistolet ne pourrait avoir lieu sans elle. Elle est le lieu d'adaptation de la pression de transfert des billes, qui peut être ainsi réglée à des valeurs comprises entre 1 et 3 bars pour prendre en compte la perte de charge due à la longueur du conduit d'alimentation. Grâce à l'appareil selon l'invention, on peut donc adapter dans chaque cas d'utilisation, la pression dans la chambre d'injection à la longueur du conduit d'alimentation du pistolet.

Le réservoir de stockage à triple paroi est d'une dimension compatible avec le fait qu'il peut être rendu mobile, par exemple à l'aide d'un système de roulettes, et transporté facilement entre le lieu de production où on le remplit de billes de glace et le lieu de projection sur la surface à nettoyer. De plus, le pistolet de projection avec sa gachette à deux contacts permet à l'opérateur de commander directement et de façon successive l'arrivée d'air comprimé pour propulser les billes et l'ouverture des moyens d'obturation ainsi que la rotation de la tige axiale qui entraine à la fois les pales de brassage et la vis d'Archimède.

Le moyen d'obturation de la partie basse du réservoir de stockage peut être réalisé par tout moyen connu tel que par exemple un disque ou un cône d'obturation du passage.

Cet appareil présente l'avantage de fonctionner pour la partie stockage, à pression atmosphérique et pour la partie transfert-propulsion à une pression qui compense les pertes de charge dans les canalisations (inférieure à 2 bars). Ceci permet de résoudre d'importants problèmes technologiques et d'offrir une maniabilité de l'ensemble tuyauteries/pistolet très appréciable pour l'utilisateur. L'implantation des commandes du vérin et du moteur pneumatiques permet d'insérer l'appareil dans tous les ateliers où il y a présence d'humidité sans poser de problèmes pour la sécurité. Des connexions à montages rapides par colliers permettent le changement dans un temps très court de l'ensemble lance/pistolet dans le cas d'utilisation à débits très élevés. L'appareil monté sur roulettes est mobile et ne possède qu'un seul raccord haute pression pour sa mise en fonctionnement ;il ne présente pas, malgré son originalité, plus de contraintes qu'une sableuse traditionnelle.

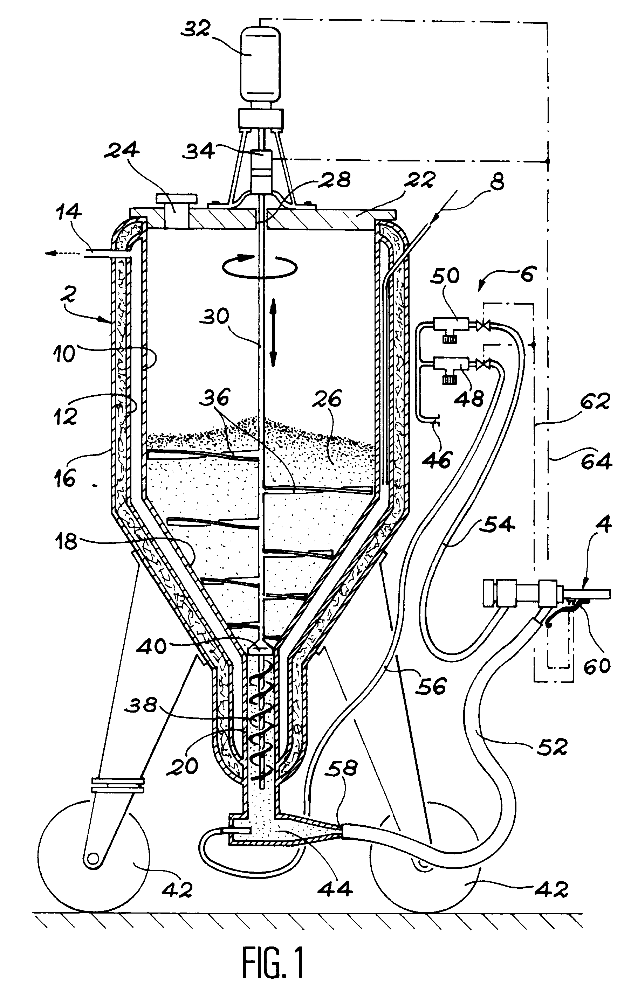

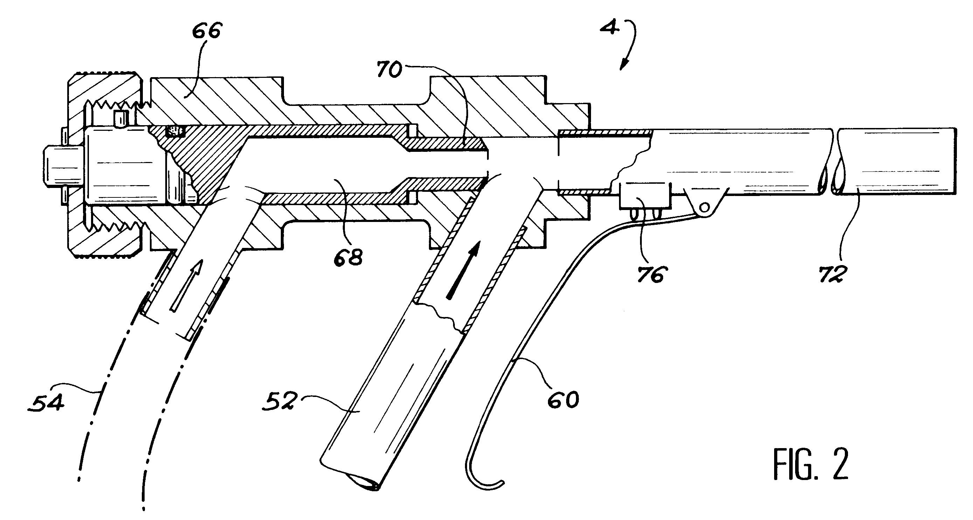

De toute façon l'inventon sera mieux comprise en se référant à la description qui suit d'un exemple de mise en oeuvre qui sera donné à titre illustratif et non limitatif en se référant aux figures 1 et 2 sur lesquelles :
- la figure 1 est une vue schématique d'ensemble du dispositif dans lequel le réservoir à triple paroi est représenté en section élévation axiale ;
- la figure 2 est un schéma montrant la constitution du pistolet de projection.

L'appareil de stockage et de projection de billes de glace comprend essentiellement, tel qu'on le voit sur la figure 1, un réservoir de révolution à triple paroi 2, un pistolet de projection 4 et une source d'air comprimé 6.

Dans l'exemple décrit, le réservoir à triple paroi 2 a une forme cylindro-conique et est réalisé en tôle d'acier inoxydable de 1 mm d'épaisseur avec une capacité volumique du réservoir intérieur de l'ordre de 200 litres pour le stockage des billes de glace. La surface intérieure est polie comme un miroir pour éviter les transferts thermiques et elle est maintenue à très basse température par l'introduction à l'aide du tube plongeur 8 en acier inoxydable d'un liquide cryogénique, par exemple de l'azote liquide, à l'intérieur de l'espace compris entre la paroi interne 10 et la paroi médiane 12. Cet espace débouche à l'extérieur par un évent 14 situé à la partie supérieure du réservoir et qui le met en communication avec l'atmosphère extérieure.

Le deuxième espace compris entre la paroi médiane 12 et la paroi externe 16 est destiné à jouer un rôle d'isolant de l'ensemble vis-à-vis de la température ambiante par le fait qu'il est maintenu sous vide et rempli d'un isolant tel que par exemple de la mousse de polyuréthane. Le réservoir intérieur constitué par la paroi 10 est prolongé par une partie conique 18 puis par une partie cylindrique 20 ayant une longueur de 150 mm et un diamètre de l'ordre 50 mm.

A la partie supérieure, le réservoir 2 est fermé par un couvercle 22 à double paroi et également rempli d'isolant. Ce couvercle 22 est percé de deux orifices dont l'un 24 sert au remplissage du réservoir par les billes de glace 26 et l'autre 28 d'un diamètre de l'ordre de 25 mm, laisse passer une tige axiale 30 reliée à un moteur 32 ainsi qu'à un vérin 34 apte à commander la translation de la tige axiale 30 selon sa longueur. Conformément à l'invention, l'ensemble du moteur 32 et du vérin 34 est solidaire du couvercle et peut être retiré avec celui-ci par simple soulèvement.

La tige axiale 30 porte dans tout le domaine conique 18 des pales de brassage 36 et, dans la partie cylindrique 20, une vis d'Archimède 38 dont le fonctionnement sera expliqué plus loin.

Entre les deux, c'est-à-dire à l'entrée de la partie cylindrique 20 se trouve un moyen d'obturation 40 qui selon l'état de translation vers le haut ou vers le bas de la tige axiale 30 permet l'ouverture ou la fermeture du passage des billes de glace de la partie supérieure du réservoir 1 vers la vis d'Archimède 20. Ce moyen d'obturation peut être d'une nature quelconque connue et par exemple une simple plaque circulaire en acier inoxydable ou un cône d'obturation.

Dans l'exemple décrit, l'appareil de stockage est monté sur des roulettes 42 qui en assurent le transport facile.

Le prolongement de la paroi interne 10, après la zone cylindrique 20 débouche à l'extérieur du réservoir 2 dans une chambre d'injection 44 à partir de laquelle les billes de glace sont envoyées par air comprimé dans le pistolet de projection 4.

Selon l'invention, une alimentation générale d'air comprimé 6 est prévue au voisinage de l'appareil et comporte à partir d'une alimentation générale 46 deux systèmes manodétendeurs-vannes d'obturation dont le premier 48 délivre de l'air à basse pression, par exemple de 1 à 3 bars, et dont le second 50 délivre de l'air comprimé à haute pression, par exemple de 3 à 20 bars.

Les billes qui sortent de la chambre d'injection 44 sont véhiculées par la canalisation de transfert 52 jusqu'au pistolet 4. Ce dernier reçoit de l'air comprimé à haute pression en provenance du système 50 par la canalisation 54. Par ailleurs, de l'air comprimé à basse pression provenant du système 48 est envoyée par la canalisation 56 à l'entrée de la chambre d'injection 44 située à l'opposé du départ de la canalisation 52. Dans l'exemple décrit, cette chambre d'injection 44 a la forme d'un T à trois ouvertures dont l'ouverture supérieure reçoit les billes transmises par la vis d'Archimède 38 dont l'ouverture latérale arrière reçoit l'air comprimé à basse pression par la conduite 56 et dont l'ouverture d'injection 58 débouche directement dans la canalisation 52 de transfert des particules vers le pistolet 4.

Selon l'une des caractéristiques très intéressantes de la présente invention, la commande de l'ensemble de l'appareil peut intervenir à l'aide d'une gâchette à double contact 60 située sur le pistolet. En effet, lorsque l'utilisateur presse sur cette gâchette, l'établissement du premier contact qui intervient par le circuit de commande pneumatique 62 met sous pression haute ou basse les canalisations 54 et 56 servant au transport et à la projection des billes de glace. Lorsque le deuxième contact est actionné, postérieurement au premier, la commande 64 également schématisée en pointillé sur la figure 1 agit à la fois sur le vérin 34 qui soulevant la tige axiale 30 libère l'ouverture 40 et la progression des billes vers le bas du réservoir 2. Ce même circuit de commande 64 met en route le moteur pneumatique 32 et par conséquent la rotation de la tige axiale 30. Il s'ensuit un brassage des billes de verre par les pales 36 qui empêchent tout phénomène de voûte dans le réservoir et une rotation de la vis d'Archimède 38 qui fait progresser ces billes de glace vers la chambre d'injection 44 puis par la canalisation 52 vers le pistolet 4.

Sur la figure 2, on représenté à plus grande échelle le pistolet 4 dont on voit le corps 66, la chambre d'injection 68 terminée par la buse 70 située dans l'axe du canon 72. L'air comprimé à haute pression arrive dans la chambre 68 par la canalisation 54 et les particules arrivent par le tube d'arrivée 52. On voit également sur la figure 2, la gâchette 60 ainsi que le double contact pneumatique 76 destiné à actionner respectivement, comme il vient d'être expliqué, le circuit pneumatique puis l'ensemble du moteur 32 et du vérin 34.

Un appareil de stockage, conforme à celui qui vient d'être décrit, a été utilisé pour effectuer le décapage de peintures, l'ébavurage de matière plastique ainsi que le nettoyage et le dégraissage de pièces de moteurs d'avions, la décontamination nucléaire de matériaux divers etc...

## Revendications

1. Appareil de stockage et de transport de billes de glace sans collage de celles-ci depuis leur lieu de fabrication jusqu'à leur lieu d'utilisation où on les projette sur une cible, comportant en combinaison :
- un réservoir de révolution (2) à triple paroi (interne, médiane et externe) pour le stockage des billes de glace, l'espace compris entre la paroi interne (10) et la paroi médiane (12) constituant une enceinte pour un gaz liquide réfrigérant, l'espace compris entre la paroi médiane (12) et la paroi externe (16) étant sous vide et rempli d'un isolant thermique, ce réservoir (2) se terminant vers le bas par une partie conique (18) puis cylindrique (20) ouverte à la partie inférieure pour communiquer avec une chambre d'injection (44) des billes, et étant fermé, à la partie supérieure, par un couvercle isolant (22) muni d'un orifice de remplissage (24) et sur lequel sont fixés :
a) un moteur (32) apte à mettre en rotation une tige axiale (30) équipée, dans la partie conique (18), de pales de brassage (36), dans la partie cylindrique (20) d'une vis d'Archimède (38), dont le pas est tel qu'elle s'oppose à la descente des billes par gravité lorsqu'elle est mue en rotation par le moteur et, entre les deux, d'un moyen (40) d'obturation du passage des billes entre la partie conique et la partie cylindrique ;
b) un vérin (34) apte à commander une translation de la tige axiale (30) selon sa longueur pour déplacer le moyen d'obturation (40) entre une position basse de fermeture du passage des billes et une position haute d'ouverture de ce même passage ;
- un pistolet (4) de projection des billes par air comprimé, dont l'entrée des billes (52) est reliée à la sortie (58) de la chambre d'injection (44) ;
- une source d'air comprimé (6) délivrant cet air à deux pressions, l'une basse et l'autre haute, l'air comprimé à basse pression étant délivré par une première canalisation (56) à l'entrée de la chambre d'injection et l'air comprimé à haute pression étant délivré par une seconde canalisation (54) à l'entrée du pistolet ;
- sur le pistolet, une gachette à double contact (60) dont le premier commande l'injection de l'air comprimé à basse et haute pression et dont le second, actionnable postérieurement au premier, commande le vérin (34) de soulèvement de la tige axiale (30) et la mise en rotation du moteur (32).

## Patentansprüche

1. Vorrichtung zur Lagerung und Beförderung von Eiskugeln, ohne daß diese aneinander haften, von ihrem Herstellungsort bis zu ihrem Verwendungsort, wo sie gegen Ziele geschleudert werden, zusammengestellt umfassend:
- einen Rotationsspeicher (2) mit einer dreifachen Wand (Innen-, Mittel-, Außenwand) zur Lagerung der Eiskugeln, wobei der zwischen der Innenwand (10) und der Mittelwand (12) enthaltene Raum ein Behältnis für ein Kühl-Flüssiggas bildet, der zwischen der Mittelwand (12) und der Außenwand (16) enthaltene Raum unter Vakuum steht und gefüllt ist mit einem Wärmeisolator, dieser Speicher (12) nach unten endet mit einem konischen (18), dann zylindrischen (20) Teil, an der Unterseite offen, um die Verbindung herzustellen mit einer Einspeisungskammer (44) der Kugeln, und an der Oberseite verschlossen ist durch einen isolierenden Deckel (22), versehen mit einer Einfüllöffnung (24), auf dem befestigt sind:
a) ein Motor (32), der eine Axialspindel (30) in Drehung versetzt, die in dem konischen Teil (18) mit Rührblättern (36) versehen ist, in dem zylindrischen Teil (20) mit einer Förderschnecke (38), deren Steigung so ist, daß sie sich dem Abrutschen der Kugeln durch Schwerkraft widersetzt, wenn sie in Drehung versetzt wird durch den Motor und, zwischen den beiden, mit einer Verschlußeinrichtung (40) des Durchgangs der Kugeln zwischen dem konischen Teil und dem zylindrischen Teil;
b) ein Zylinder (34) für eine Verschiebung der Axialspindel (30) in Längsrichtung, um die Verschlußeinrichtungen (40) zu verschieben zwischen einer unteren Verschlußstellung des Durchgangs der Kugeln und einer oberen öffnungsstellung desselben Durchgangs;
- eine Druckluft-Spritzpistole (4) für Eiskugeln, deren Kugeleintritt (52) verbunden ist mit dem Ausgang (58) der Einspeisungskammer (44); eine Druckluftquelle (6), die diese Luft mit zwei Drücken liefert, der eine niedrig und der andere hoch, wobei die Druckluft mit niedrigem Druck über eine erste Leitung (56) an den Eingang der Eispeisungskammer geliefert wird und die Druckluft mit dem hohen Druck über eine zweite Leitung (54) an den Eingang der Pistole geliefert wird;
- ein Drücker (60) mit Zweifachkontakt, wovon der erste das Einblasen von Druckluft mit niedrigem und hohem Druck steuert und der zweite, den man nach dem ersten betätigen kann, den Hubzylinder (34) der Vertikalspindel (30) und das Einschalten des Motors (32) steuert.

## Claims

1. Apparatus for the storage and transfer of ice balls without any sticking of the latter from their place of production up to their place of use, where they are projected onto a target, comprising in combination:
- a triple wall (internal, median and external) revolving tank (2) for the storage of the ice balls, the space between the internal wall (10) and the median wall (12) constituting an enclosure for a refrigerating liquid gas, the space between the median wall (12) and the external wall (16) being under a vacuum and filled with a thermal insulant, said tank (2) being terminated towards the bottom by a conical (18) and then cylindrical part (20) open in its lower portion in order to communicate with a ball injection chamber (44), whilst being closed in its upper portion by an insulating cover (22) having a filling orifice (24) and to which are fixed:
a) a motor (32) able to rotate an axial rod (30) equipped, in the conical part (18), with mixing or stirring blades (36) and in the cylindrical part (20) with an Archimedean screw (38), whose pitch is such that it opposes the descent of the balls by gravity when rotated by the motor and, between the two, a means (40) for sealing the passage of the balls between the conical part and the cylindrical part,
b) a jack (34) able to control a translation of the axial rod (30) along its length in order to displace the sealing means (40) between a bottom position sealing the passage of the balls and a top position opening said passage,
- a gun (4) for projecting the balls by compressed air action, whose inlet of the pipe (52) is connected to the outlet (58) of the injection chamber (44),
- a compressed air source (6) supplying the air at two pressures, one being low and the other high, the low pressure compressed air being supplied by a first duct (56) to the inlet of the injection chamber and the high pressure compressed air being supplied by a second duct (54) to the inlet of the gun,
- on the gun, a double contact trigger (60), whereof the first contact controls the injection of the low and high pressure compressed air and whereof the second, which is operable subsequent to the first, controls the jack (34) for raising the axial rod (30) and the rotation of the motor (32).
